# EUROPEAN PATENT SPECIFICATION

(11) **EP 0 467 036 B1**
(45) Date of publication and mention of the grant of the patent: **07.02.1996**
(21) Application number: 91107878.0
(22) Date of filing: 15.05.1991
(51) Int. Cl.: G01S 13/82, G01S 13/74, G07C 9/00, G06K 17/00

(54) **Method and apparatus for radio identification and tracking**
Verfahren und Gerät zur Radioidentifizierung und Zielverfolgung
Procédé et appareil d'identification de radio et de poursuite

(30) Priority: 15.06.1990 US 538546
(43) Date of publication of application: 22.01.1992
(73) Proprietor: SAVI TECHNOLOGY, INC., Palo Alto, California 94306 (US)
(72) Inventor: Reis, Robert S., Palo Alto, California 94301 (US); Stevens, Richard K., Cupertino, California 95014 (US)
(74) Representative: Liesegang, Roland, Dr.-Ing.

(56) References cited:
- EP-A- 0 161 779
- EP-A- 0 245 555
- EP-A- 0 290 725
- GB-A- 2 207 787
- US-A- 4 177 466

## Description

The present invention relates to an apparatus and to a method for identifying items through transmission and receiption of signals according to the preamble of claims 1 and 8, respectively. (EP-A-161 779)

Generally, this invention relates to a method and apparatus for tracking and identifying physical objects, and more particularly to radio frequency identification and tracking systems using product tags having built-in radio frequency transceivers.

A number of systems are known to exist that aid in the identification and tracking of physical objects in various environments. For instance, (1) Optical barcode readers are typically used in supermarkets to track product movement. (2) Optical character recognition systems are used in some department stores for the same purpose. (3) Magnetic stripe readers are commonly used to identify bank cards in automated teller machines. (4) Sophisticated security systems make use of voice recognition to identify humans. (5) Radio Frequency Identification ("RF/ID") offers another approach to automatic identification and tracking.

Historically, RF/ID systems have used one of two radio communication techniques. One type of system has used passive RF reflectors, and the other type has used magnetic couplers.

In the passive systems, RF-reflective "tags" are affixed to the products to be identified or tracked. When the products are positioned within sufficient range of an RF source, the tags are energized by the incident RF energy. The illuminated tags reflect a portion of the RF back to a receiver, modifying some aspect of the RF in the process. The product is identified by the manner in which the incident RF energy is modified upon reflection.

The passive reflector tags of the prior art have several inherent limitations. The signal-to-noise ratio of the resultant identification signal is dependent upon the incident power level of the illuminating RF source, the geometry of the reflector and the efficiency of the modulation and reflection process. It is therefore common for the identification signal to be substantially weaker (e.g., 100 dB weaker) than the illuminating signal. Thus, very strong illuminating signals are required for the process to work even over limited ranges. Accordingly, passive reflector systems require directed illumination rather than omnidirectional illumination to achieve reasonable ranges. Omnidirectional illumination is generally preferred because it does not require prior knowledge of the location of the tag with respect to the illuminating source.

Additionally, the communication process of a passive reflector is fundamentally one-way. The purpose of the illuminator is not to communicate any information to the tag, but only to provide a source of activating energy. There is no method for "handshaking" between the product tag and the central system to verify that the proper identification has been made.

The third disadvantage of passive reflector tags of the prior art is their inability to dynamically store data. The interrogator of such a system has no means to dynamically write data into the tag for later re-transmission by the tag. Effectively, the tag becomes a mere static identifier for the attached item. Such tags lack the capability to change characteristics appropriate to the dynamic environment of the tags.

In systems using magnetic coupling, radio tags are energized by movement through a magnetic field, and the energized tags transmit magnetically-coupled energy back to the interrogator unit. Am alternating field generated by an induction coil may be employed to generate the requisite energizing magnetic field for this system. This communication is typically transmitted at very low frequencies ("VLF").

Magnetically-coupled radio tags are inherently restricted to close-range communications. This is due to the coupling inefficiency of small loop antennas (necessitated by the tag size) at VLF frequencies.

The EP-A-161 779 discloses a method for identifying and tracking items, wherein a transceiver tag is associated to each of the items to be tracked, an interrogation signal is transmitted to the transceiver tags, identification signals are selectively transmitted from the transceiver tags, the identification signals are received, a verification signal is transmitted and, if the tag identifying signal is not followed immediately by a tag acknowledgment signal that is recognized by the tag, the tag continuous repeatedly to send a tag identifying signal. According to this document tags continuously transmit signals without any reference or correlation to what other tags are doing.

The present invention provides an apparatus and a method for identifying items through transmission and receiption of signals, comprising the features of claims 1 and 8, respectively.

To overcome the limitations of the prior art RF/ID systems, the method and apparatus of the present invention includes radio frequency reception and transmission capability at both the tag end and at the interrogation end of the system. Communication via active optical, infrared, UV, magnetic and acoustic media could also be used in accordance with the present invention. The method and apparatus of the present invention uses handshaking to verify the receipt of correct information from each individually tagged item. In accordance with the present invention, spatial, polarization, time and frequency diversity methods may be employed to overcome the limitations of multipath or multiple-device interference in the radio tag environment. The method and apparatus of the present invention use a intentional cellular communication range restriction to assist in the locating of said tags. In accordance with the present invention a MESFET front end is coupled to a super-regenerative receiver. This electronic circuit configuration substantially reduces interference normally associated with super-regenerative receivers and permits the use of inexpensive super-regenerative receiver technology in the congested environment of closely associated radio tags. In accordance with the present invention some characteristic of the intentional radiation (e.g., phase, time-of-arrival, angle-of-arrival) is used to determine the location of the tag relative to the interrogator within a cell. The method and apparatus of the present invention also increases the robustness of communications by handling situations in which signals from individual tags are time-coincident at the interrogation end.

### Description of the Drawings

Figure 1 is a block diagram of the radio tag subsystem of apparatus in accordance with the present invention.

Figure 2 shows the use of multiple interrogators in a cellular tag tracking system, in accordance with the present invention.

Figure 3 is a block diagram of the MESFET front end of the tag receiver shown in Figure 1.

Figure 4 is a schematic diagram of the micropower wake-up circuit shown in Figure 1.

Figure 5 is a block diagram of interrogator subsystem of apparatus in accordance with the present invention.

Figure 6 is a flowchart of the Batch Collection Protocol as implemented in the interrogator subsystem of Figure 5.

Figure 7 is a flowchart of the Batch Collection Protocol as implemented in the radio tag subsystem of Figure 1.

Figure 8 is a timing diagram showing the operation of the random delay process.

Figure 9 is description of the preferred data format for communications between the tag and interrogation subsystems in accordance with the present invention.

Figure 10 is a functional block diagram of one embodiment of a linear recursive sequence generator in accordance with the present invention.

### Description of the Preferred Embodiment

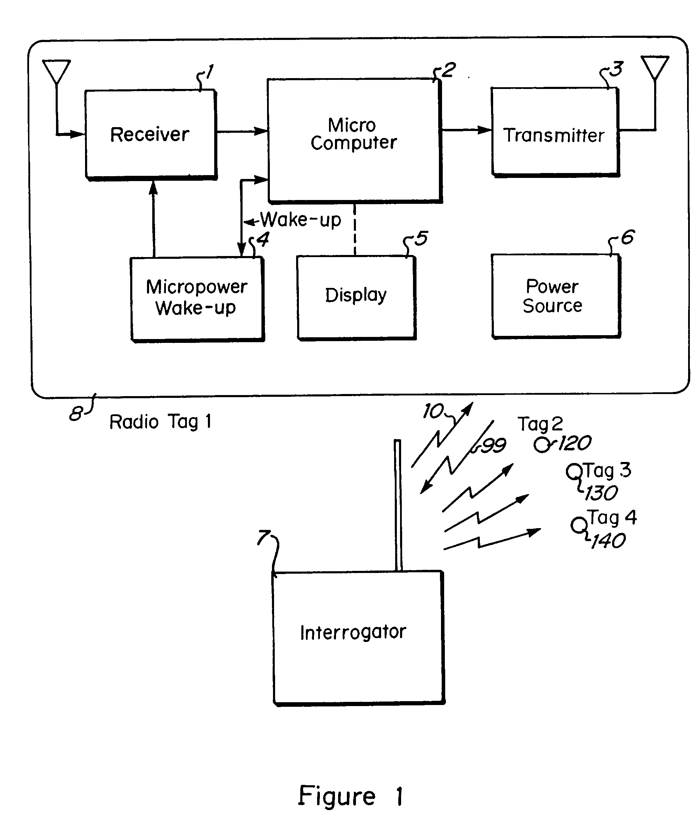

Referring now to Figure 1, a block diagram for apparatus in accordance with the present invention is shown. Two major types of subsystems comprise the apparatus: the tag transceiver subsystems 8, 120, 130, 140 and the interrogator subsystem 7. The tag transceiver subsystem 8 is comprised of a receiver 1 to capture and demodulate the signal 10 from the interrogator 7 and a transmitter 3 to modulate and emit the signal 99 back to the interrogator 7. Further comprising this tag are a microcomputer 2, which processes data from the received signal, applies batch collection protocol to verify communications and controls the transmitter 3; a power source 6; an optional display 5; and a micropower wake-up circuit 4. The wake-up circuit 4 keeps the tag in a very low power state until a predefined wake-up signal is heard. The display 5 can be used to provide status information about the identification or tracking process, or to display other messages to personnel viewing the RF tag 1.

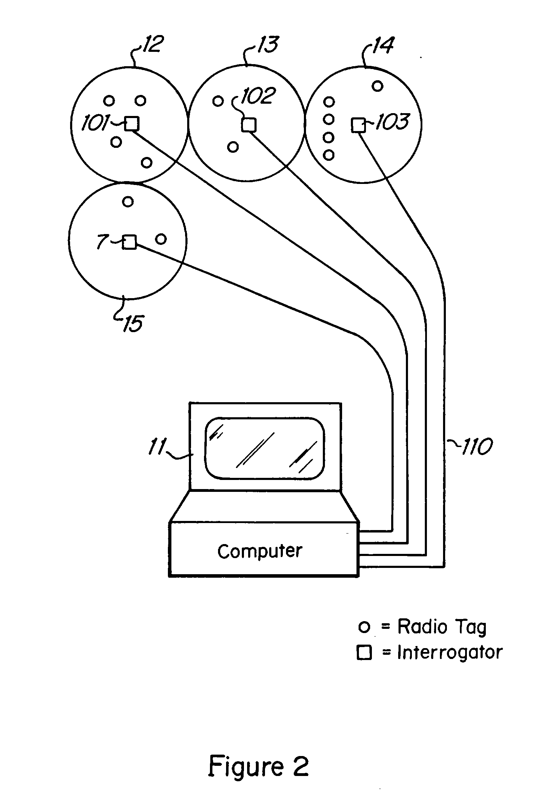

Referring now to Figure 2, multiple interrogators may be positioned and networked to create a cellular reception environment. Interrogators 10, 101, 102, 103 located in each of the cells 15, 12, 13, 14 communicate with a computer 11 via a network 110 of conventional design (wired-line, optical fiber, radio link, etc.), and also with all of the radio tags located within the communication cell of that interrogator. The cells 12, 13, 14, 15 correspond with the communication radius of the interrogators 101, 102, 103, 10, respectively. An array of these interrogator communication cells placed strategically around a facility provides the necessary communications structure to communicate with all of the tags located in the facility. As the identifying signal from each tag is heard, the corresponding interrogator communicates the identification code to the monitoring computer, thereby identifying not only the tag, but the approximate location of the tag as well. If only identification information, and not location information, is required, a single cell system without a computer 11 or network 110 may be used, in accordance with the present invention.

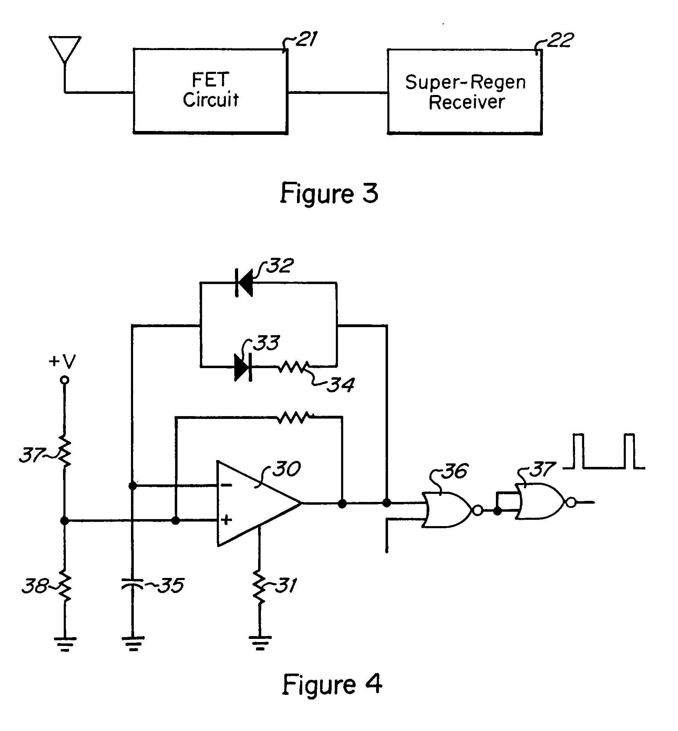

Referring now to Figure 1 and Figure 3, any type of receiver and transmitter can be used in accordance with the invention (e.g., infrared, acoustic, RF, optical, magnetic). In the preferred embodiment RF at VHF is used. A receiver module 1 comprising a conventional superregenerative receiver 22 coupled to a MESFET front-end 21 and a conventional on/off keyed AM transmitter 3 are used. Also, any type of microcomputer 2 can be used as long as the speed of the processor is sufficient to process the data and implement the necessary batch collection protocol. In the preferred embodiment, an 8-bit microcontroller is employed.

In the preferred embodiment, the tag receiver 1 is a modified superregenerative receiver. The modification is shown in Figure 3 and involves the addition of an FET (field-effect transistor) front end 21 to a superregenerative receiver of the standard variety 22. Without the use of the FET front-end, the superregenerative receiver would emit an RF signal (noise) back into the environment via the directly-connected antenna and would interfere with the reception capabilities of other close-proximity tags. FET circuits characteristically have extremely high reverse signal isolation, so the use of a FET front end substantially reduces leakage of RF and quench energy from the receiver and at the same time increases the sensitivity of the receiver. As a result, this design in accordance with the present invention permits the use of an inexpensive receiver design, such as a superregenerative circuit, in the demanding network environment of radio tag communications.

Referring now to Figures 1 and 4, to increase the service life of the power source 6, which is typically a small battery, the receiver module 1 in the tag subsystem 8 normally remains in a quiescent low-power state for all but a small fraction of the time. During the small time intervals that the receiver module 1 in the tag subsystem 8 is activated, the energizing power from the wake-up module 4 allows detection of the wakeup signal arriving from the interrogator 7. If no such signal is detected, the tag receiver subsystem 8 continues its sleep/wake cycle by returning to the low-power state. If, however, RF energy from the interrogator 7 is detected, the tag subsystem 8 changes to full power mode to prepare for communication with the interrogator 7.

Referring now to Figure 1 and Figure 4, in the preferred embodiment, the micropower wake-up circuit 4 uses an extremely low-drain astable oscillator to strobe energy to the receiver. The design of the wake-up circuit 4 is based on a programmable opamp 30 used in an extremely-low power mode. In the preferred embodiment, a 50 megohm current-set resistor 31 is employed. High-speed switching diodes 32, 33 are configured in a quasi anti-parallel mode to provide a highly assymetric (low duty cycle) wakeup waveform. Resistors 37 and 38 are used to bias op-amp 30 at a level one half of the system voltage level. Resistor 34 and capacitor 35 are selected to provide an oscillator which is active for a short period (approximately 1 millisecond in the preferred embodiment) and inactive for a long period (approximately 1 second in the preferred embodiment). The oscillator signal then strobes a pair of high source-current logic gates 36, 37, which can then cleanly power the rest of the receiver circuit.

The resulting power strobe circuit of Figure 4 has the ability to source the current (10 milliamps) necessary to power the receiver circuit, yet itself draws only 2 microamps on average during the 99 msec. that the receiver is not active.

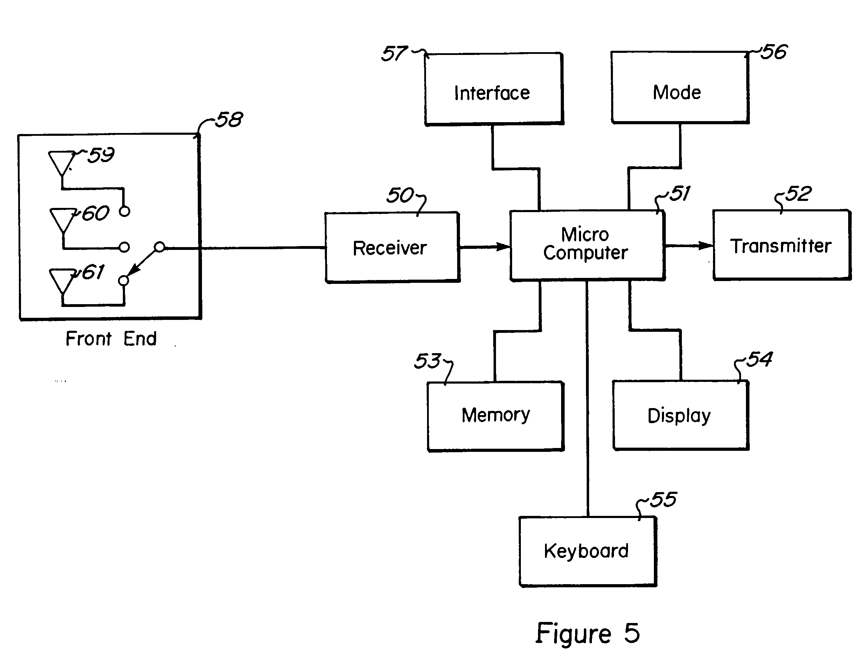

Referring now to Figure 5, the interrogator apparatus consists of a receiver 50, a microcomputer 51, a transmitter 52, memory 53, and optionally a display 54, optional keypad 55, modem 56 and cable interface 57. All of these components are conventional in design except possibly for the receiver 50. The receiver 50 may be either of conventional superhetrodyne design or may be an FET-modified superregenerative receiver such as described in connection with Figure 3.

Various techniques may be employed in accordance with the invention to improve the robustness of the communication against signal multipath and other interference. Example techniques include antenna diversity, frequency diversity, polarization diversity, and time diversity. In the preferred embodiment, a combination of antennas 59, 60, 61 employing both polarization diversity and spatial diversity are used in the front end module 58 to the receiver 50.

A second mode of signal enhancement that may be employed in the interrogator apparatus is parameter enhancement. For instance, effective transmission power may be enhanced through the use of repeater apparatus, and other apparatus may be used to determine the direction and range from a repeater to a tag. To implement the repeater enhancement, certain relay units rebroadcast a tag signal to a more distant interrogator unit that has a particular association with that particular tag. Such a system increases the effective range between tags and their associated interrogators. The ranging and direction-finding enhancements may be implemented by employing acoustic transducers in one path of the two-way link between the tag and the interrogator. Acoustic waves propogate much more slowly than do electromagnetic waves and therefore can be used for more accurate short-range location using conventional echo-location techniques. In addition, multiple acoustic beams may be used to provide direction measurement using conventional triangulation techniques.

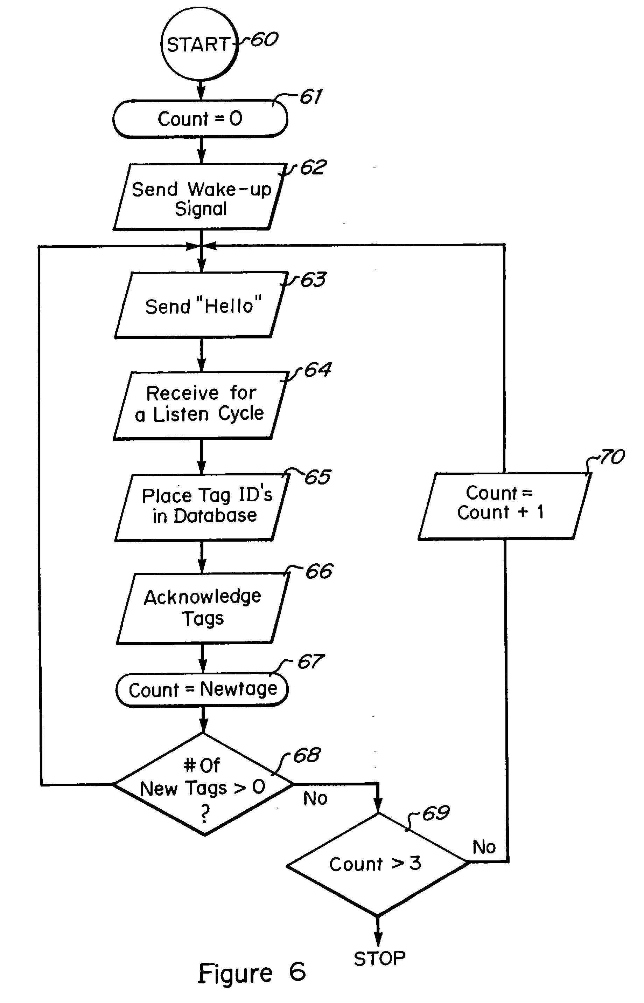

Referring now to Figures 6, 7 and 8, in accordance with the invention, a batch collection protocol or method is employed to handle situations in which multiple tag subsystems respond simultaneously to the presence of RF energy from an interrogation subsystem 7.

Many common applications of the present invention would not require constant interrogation of all tags within radio range of the interrogator 7. In such applications, all tags normally remain in low-power standby mode, as previously discussed. When interrogation is desired, a interrogation "wake-up" signal is transmitted by the interrogator 62. In the preferred embodiment this signal is a VHF radio signal modulated at 62 KHz. This signal must be sent for a period equal to or greater than the micro-power scan period, or 1000 milliseconds in the preferred embodiment. When the wake-up signal is received by the tag 1, the reset pin of the microcomputer 2 is activated. The reset wakes up the microcomputer from its low-power state and initiates the wake-up routine. The routine is called "Listen for Hello" 72.

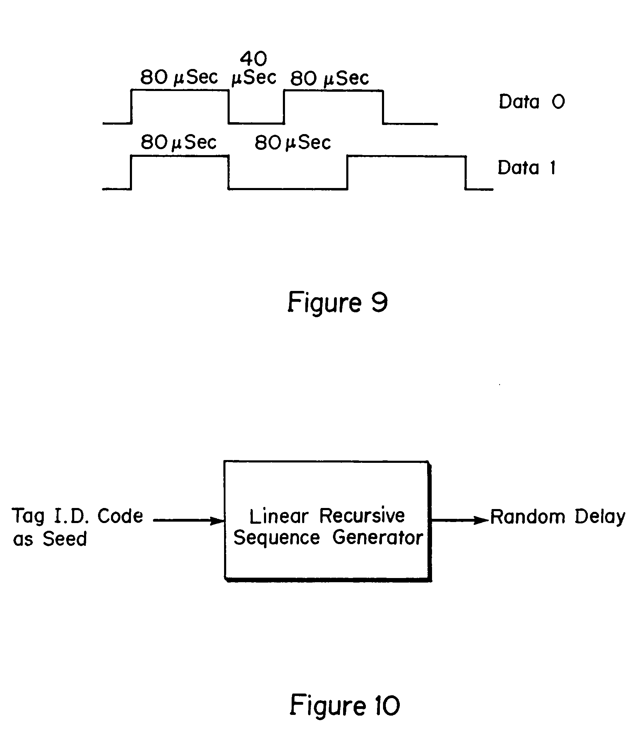

After a delay sufficient for all tags to get to state 72, a "Hello" command is sent by the interrogator. The "Hello" is a signal that instructs all tags that have been awakened to begin their response protocol. Referring now to Figure 9, the preferred format of the "Hello" signal, and all other data exhanges, is a pulse-width modulated code which is configured with 80 microsecond pulses and 40 or 80 microsecond spaces, corresponding to a data information bandwidth not exceeding 25 kHz. However, other data exchange systems could also be used in accordance with the present invention.

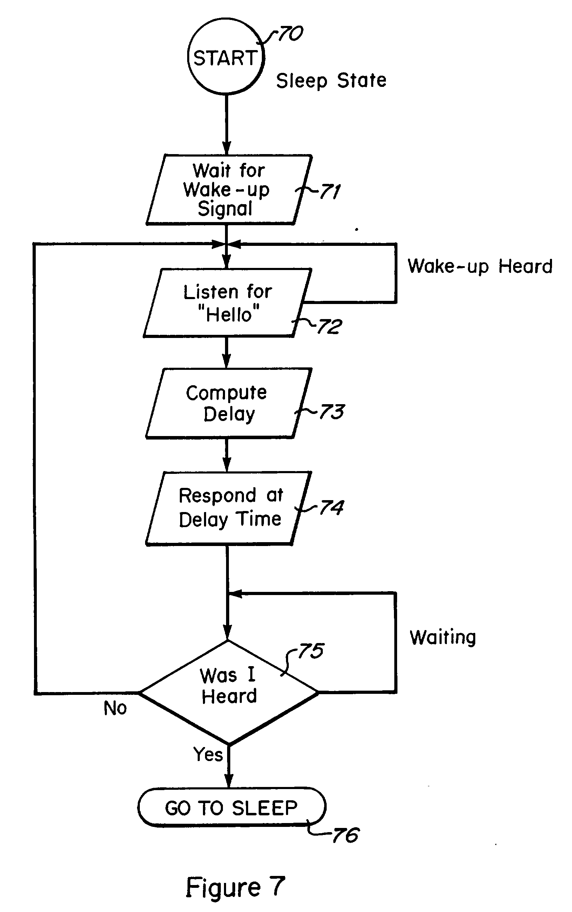

The reception of the "Hello" signal begins the send/acknowledge loop shown as steps 73, 74, 75 in Figure 7. First, a delay is computed 73. This delay needs to be as random as possible for the collision avoidance technique to work efficiently. In the preferred embodiment, a linear recursive sequence generator 90 seeded by the tag identification address is used to generate these delays, as shown in Figure 10.

The tag responds at this delay time with its identification address 74 and then waits for acknowledgement 75. During this fixed listen cycle 64, the interrogator places all of the identification codes heard during the cycle into a dynamic database 65. At the end of the listen cycle (assuming at least one ID code was heard) it transmits the list of received ID codes back to the tags 66. If no new tag signals were received 67, 68, 69 then the process ends.

The tags collectively wait for acknowledgement that they were heard 75. If the unique ID code of a tag is properly received in the interrogator acknowledge cycle 66, 75 then this tag can return to stand by mode 76. If it is not acknowledged, then the tag tries again by sending its ID code back to the interrogator, albeit with a different delay period 72, 73, 74, 75.

Since the transmission time of the identification packet is small relative to the listen period (see Figure 7), the probability of tag responses colliding on top of one another is small and gets even less probable as the process continues. The probability of collision of each cycle is determined by the duty cycle, the listen period, the number of tags heard and the degree of randomness of the transmit delay for each transmission.

For the preferred embodiment, a probability of collision of one per one hundred tag units is defined.

Typically, with a well balanced collision protocol, the collision iteration process occurs at approximately a square-law rate.

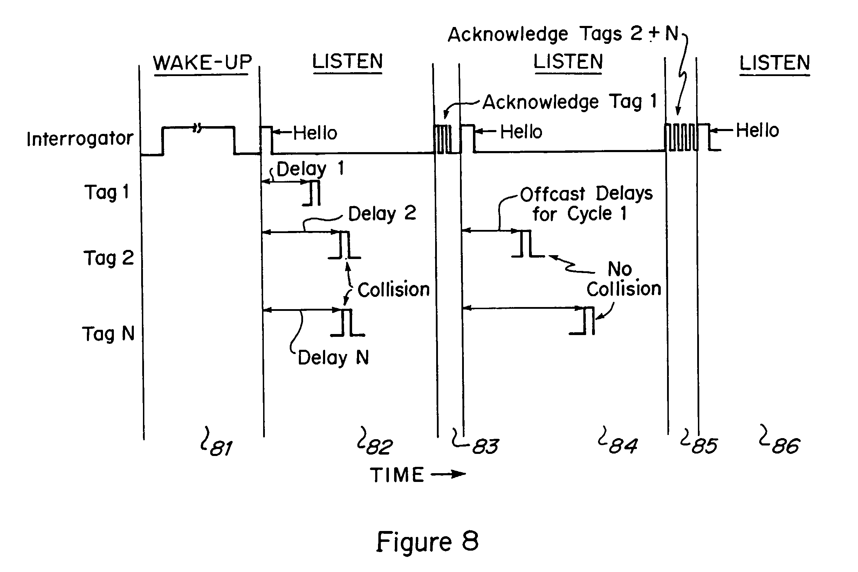

The timing of this process is demonstrated graphically in Figure 8. The interrogator wakes-up all tags in the wake-up state 81, begins the listen cycle 82 by sending out a 'hello' command, acknowledges tags 83 and repeats the process 84, 85, 86 until all collisions have been resolved.

The networking scheme described above can be further enhanced by the use of A) targeted wake-up [a special hello code is sent followed by an address code] which wakes up only that specific tag; B) messaging [the tag appends a message into its address in the listen cycle] and C) reverse messaging [the interrogator adds a message to a specific tag's acknowledgement].

In accordance with the present invention, the collision avoidance method could employ randomization based on any of several communication parameters. In the preferred embodiment, response delay is used. However, the method could employ frequency, phase, amplitude or spatial variation as well.

Therefore, an identification and tracking system uses two-way communications between a central interrogator and individual radio transceiver tags to identify tagged items within the reception and transmission range of the interrogator.

## Claims

1. Apparatus for identifying items through transmission and reception of signals comprising:
a plurality of tag transceivers (8; 120, 130, 140), one for each of said items, each of said tag transceivers (8; 120, 130, 140) including signal receiving means (1; 21, 22) and sending means (3);
an interrogation transceiver (7) for communicating with said tag transceivers, said interrogation transceiver (7) including signal sending means (52) and receiving means (50);
wherein said tag transceivers and said interrogation transceiver communicate with a communication protocol, **characterized** in that
said communication protocol is a batch protocol including a sequence, common to all tag transceivers, having
a listen period during which each of said plurality of tag transceivers can communicate a tag identifying signal to said interrogation transceiver and
an acknowledge period during which said interrogation transceiver can communicate acknowledge signals to said tag transceivers; and that
said signal sending means (52) of said interrogation transceiver are adapted for sending a start signal to the tag transceivers to signal the commencement of the listen period, said receiving means (50) of said interrogation transceiver are adapted to receive tag identifying signals during said listen period from a subset of said tag transceivers, and said signal sending means (52) of said interrogation transceiver are further adapted for sending acknowledge signals during said acknowledge period to said subset of said tag transceivers; and
said signal receiving means (1; 21, 22) of said tag transceivers are adapted for receiving the start signal from the signal sending means (52) of said interrogation transceiver so as to identify the start of the listen period, said sending means (3) of said tag transceivers are adapted for sending a tag identifying signal during the listen period, and said signal receiving means (1; 21, 22) of said tag transceivers are adapted for receiving an acknowledge signal from said interrogation transceiver during the acknowledged period.

2. Apparatus as in claim 1, characterized in that the tag transceivers (8,120,130,140) remain in a low-power standby mode until activated by said start signal (81) from the interrogation transceiver (7).

3. Apparatus as in claims 1 or 2, characterized in that the tag identifying signal from each tag transceiver (8,120,130,140) is unique.

4. Apparatus as in one of the preceding claims, characterized in that a power strobe circuit periodically provides a signal to a microprocessor in each tag transceiver to cause low-power standby operation.

5. Apparatus as in one of the preceding claims, characterized in that the tag transceivers (8,120,130,140) comprise means (2) for delaying the transmission of the tag identifying signal by any remaining tag transceivers for a particular period of time after the interrogation transceiver signals that retransmission will be required.

6. Apparatus as in claim 5, characterized in that the particular period of time is different for each remaining tag transceiver and is determined in a pseudorandom manner.

7. Apparatus as in one of the preceding claims, further characterized in that the apparatus comprises means for determining the location of tag transceivers tags (8,120,130,140).

8. Method for identifying items through transmission and reception of signals in a system comprising:
a plurality of tag transceivers (8; 120, 130, 140), one for each of said items,
an interrogation transceiver (7) for communicating with said tag transceivers,
wherein said tag transceivers and said interrogation transceiver communicate with a communication protocol, **characterized** in that
said communication protocol is a batch protocol including a sequence, having
a listen period during which each of said plurality of tag transceivers can communicate a tag identifying signal to said interrogation transceiver and having an acknowledge period during which said interrogation transceiver can communicate acknowledge signals to said tag transceivers; and that
said interrogation transceiver sends a start signal to the tag transceivers to signal the commencement of the listen period, receives tag identifying signals during said listen period from a subset of said tag transceivers, and sends acknowledge signals during said acknowledge period to said subset of said tag transceivers; and that
said tag transceivers receives the start signal from said interrogation transceiver so as to identify the start of the listen period, sends a tag identifying signal during the listen period, and receives an acknowledge signal from said interrogation transceiver during the acknowledged period.

9. The method according to claim 8, characterized in that the start signal and the acknowledge signals are transmitted by a central interrogation transceiver subsystem.

10. The method according to claims 8 or 9, characterized in that all tag transceivers within a receiving range of the start signal transmit identification signals.

11. The method according to claims 8, 9 or 10, characterized in that the step of transmitting tag identifying signals further comprises the step of each tag transceiver delaying the initiation of transmission of the tag identifying signal a particular amount of time after receipt of the start signal.

12. The method as in claim 11, characterized in that the particular amount of time is determined in a pseudorandom manner.

## Patentansprüche

1. Vorrichtung zum Identifizieren von Objekten durch das Senden und Empfangen von Signalen, welche umfaßt:
eine Mehrzahl von Markierungs-Sendeempfängern (8;120,130,140), einen für jedes der genannten Objekte, wobei jeder Markierungs-Sendeempfänger (8;120,130,140) eine Signalempfangseinrichtung (1;21,22) und eine Sendeeinrichtung (3) enthält,
einen Abfrage-Sendeempfänger (7) zum Kommunizieren mit den Markierungs-Sendeempfängern, wobei der Abfrage-Sendeempfänger (7) eine Signalsendeeinrichtung (52) und eine Empfangseinrichtung (50) enthält,
wobei die Markierungs-Sendeempfänger und der Abfrage-Sendeempfänger mit einem Kommunikationsprotokoll kommunizieren,
dadurch **gekennzeichnet**,
daß das Kommunikationsprotokoll ein Batchprotokoll ist, das eine allen Markierungs-Sendeempfängern gemeinsame Sequenz enthält, welche
eine Hörperiode, während der jeder aus der Mehrzahl von Markierungs-Sendeempfängern ein Markierungsidentifizierungssignal zu dem Abfrage-Sendeempfänger übermitteln kann, und
eine Rückmeldeperiode aufweist, während welcher der Abfrage-Sendeempfänger Rückmeldungssignale zu den Markierungs-Sendeempfängern übermitteln kann, und
daß die Signalsendeeinrichtung (52) des Abfrage-Sendeempfängers dafür eingerichtet ist, ein Startsignal an die Markierungs-Sendeempfänger zu senden, um den Beginn der Hörperiode anzuzeigen, die Empfangseinrichtung (50) des Abfrage-Sendeempfängers dafür eingerichtet ist, Markierungsidentifizierungssignale während der Hörperiode von einer Untergruppe der Markierungs-Sendeempfänger zu empfangen und die Signalsendeeinrichtung (52) des Abfrage-Sendeempfängers weiterhin dafür eingerichtet ist, Rückmeldungssignale während der Rückmeldungsperiode zu der Untergruppe von Markierungs-Sendeempfängern zu senden, und
die Signalempfangseinrichtung (1;21,22) der Markierungs-Sendeempfänger dafür eingerichtet ist, das Startsignal von der Signalsendeeinrichtung (52) des Abfrage-Sendeempfängers zu empfangen, um den Beginn der Hörperiode zu identifizieren, die Sendeeinrichtung (3) der Markierungs-Sendeempfänger dafür eingerichtet ist, ein Markierungsidentifizierungssignal während der Hörperiode zu senden und die Signalempfangseinrichtung (1;21,22) der Markierungs-Sendeempfänger dafür eingerichtet ist, ein Rückmeldungssignal von dem Abfrage-Sendeempfänger während der Rückmeldungsperiode zu empfangen.

2. Vorrichtung nach Anspruch 1, dadurch **gekennzeichnet**, daß die Markierungs-Sendeempfänger (8,120,130,140) in einem Bereitschaftsmodus mit geringem Energieverbrauch bleiben, bis sie durch das Startsignal (81) von dem Abfrage-Sendeempfänger (7) aktiviert werden.

3. Vorrichtung nach Anspruch 1 oder 2, dadurch **gekennzeichnet**, daß das Markierungsidentifizierungssignal von jedem Markierungs-Sendeempfänger (8,120,130,140) individuell ist.

4. Vorrichtung nach einem der vorangehenden Ansprüche, dadurch **gekennzeichnet**, daß eine Stromversorgungstastung periodisch ein Signal zu einem Mikroprozessor in jedem Markierungs-Sendeempfänger liefert, um einen Bereitschaftsbetrieb mit geringem Energieverbrauch zu bewirken.

5. Vorrichtung nach einem der vorangehenden Ansprüche, dadurch **gekennzeichnet**, daß die Markierungs-Sendeempfänger (8,120,130,140) eine Einrichtung (2) zum Verzögern der Übertragung des Markierungsidentifizierungssignals von jedem verbleibenden Markierungs-Sendeempfänger um eine bestimmte Zeitdauer nach den Signalen des Abfrage-Sendeempfängers, daß ein Rücksenden erforderlich ist, umfassen.

6. Vorrichtung nach Anspruch 5, dadurch **gekennzeichnet**, daß die bestimmte Zeitdauer für jeden verbleibenden Markierungs-Sendeempfänger verschieden ist und in einer pseudozufälligen Weise bestimmt wird.

7. Vorrichtung nach einem der vorangehenden Ansprüche, dadurch **gekennzeichnet**, daß die Vorrichtung eine Einrichtung zum Bestimmen des Orts der Markierungen der Markierungs-Sendeempfänger (8,120,130,140) umfaßt.

8. Verfahren zum Identifizieren von Objekten durch Senden und Empfangen von Signalen in einem System, welches umfaßt:
eine Mehrzahl von Markierungs-Sendeempfängern (8;120,130,140), einen für jedes der genannten Objekte, einen Abfrage-Sendeempfänger (7) zum Kommunizieren mit den Markierungs-Sendeempfängern,
und bei dem die Markierungs-Sendeempfänger und der Abfrage-Sendeempfänger mit einem Kommunikationsprotokoll kommunizieren,
dadurch **gekennzeichnet**,
daß das Kommunikationsprotokoll ein Batchprotokoll ist, welches eine Sequenz enthält, die
eine Hörperiode, während der jeder aus der Mehrzahl von Markierungs-Sendeempfängern ein Markierungsidentifizierungssignal zu dem Abfrage-Sendeempfänger übermitteln kann, und eine Rückmeldungsperiode aufweist, während der der Abfrage-Sendeempfänger Rückmeldungssignale zu den Markierungs-Sendeempfängern übermitteln kann, und
daß der Abfrage-Sendeempfänger ein Startsignal an die Markierungs-Sendeempfänger sendet, um den Beginn der Hörperiode anzuzeigen, Markierungsidentifizierungssignale während der Hörperiode von einer Untergruppe der Markierungs-Sendeempfänger empfängt und Rückmeldungssignale während der Rückmeldungsperiode an die Untergruppe der Markierungs-Sendeempfänger sendet und
daß die Markierungs-Sendeempfänger das Startsignal von dem Abfrage-Sendeempfänger empfangen, so daß sie den Beginn jeder Hörperiode identifizieren, ein Markierungsidentifizierungssignal während der Hörperiode senden und ein Rückmeldungssignal von dem Abfrage-Sendeempfänger während der Rückmeldungsperiode empfangen.

9. Verfahren nach Anspruch 8, dadurch **gekennzeichnet**, daß das Startsignal und die Rückmeldungssignale durch ein zentrales Abfrage-Sendeempfänger-Untersystem gesendet werden.

10. Verfahren nach Anspruch 8 oder 9, dadurch **gekennzeichnet**, daß alle Markierungs-Sendeempfänger in einem Empfangsbereich des Startsignals Identifizierungssignale senden.

11. Verfahren nach Anspruch 8, 9 oder 10, dadurch **gekennzeichnet**, daß der Schritt des Sendens von Markierungsidentifizierungssignalen weiterhin den Schritt umfaßt, daß jeder Markierungs-Sendeempfänger den Beginn des Sendens des Markierungsidentifizierungssignals um eine bestimmte Zeitdauer nach dem Empfang des Startsignals verzögert.

12. Verfahren nach Anspruch 11, dadurch **gekennzeichnet**, daß die bestimmte Zeitdauer in einer pseudozufälligen Weise bestimmt wird.

## Revendications

1. Appareil pour identifier des éléments par émission et réception de signaux comprenant :
une pluralité d'émetteurs-récepteurs d'étiquettes (8 ; 120, 130, 140), un pour chacun des éléments, chaque émetteur-récepteur d'étiquette (8 ; 120, 130, 140) comprenant un moyen de réception de signal (1 ; 21, 22) et un moyen d'émission de signal (3) ;
un émetteur-récepteur d'interrogation (7) pour communiquer avec les émetteurs-récepteurs d'étiquettes, l'émetteur-récepteur d'interrogation (7) incluant un moyen d'émission de signal (52) et un moyen de réception de signal (50) ;
dans lequel les émetteurs-récepteurs d'étiquettes et l'émetteur-récepteur d'interrogation communiquent par un protocole de communication ;
caractérisé en ce que :
le protocole de communication est un protocole par lot incluant une séquence commune à tous les émetteurs-récepteurs d'étiquettes, comportant :
- une période d'écoute pendant laquelle chaque émetteur-récepteur d'étiquette peut transmettre un signal d'identification d'étiquette à l'émetteur-récepteur d'interrogation, et
- une période d'accusé-réception pendant laquelle l'émetteur-récepteur d'interrogation peut transmettre des signaux d'accusé-réception aux émetteurs-récepteur d'étiquettes ; et en ce que :
le moyen d'émission de signal (52) de l'émetteur-récepteur d'interrogation est adapté à envoyer un signal d'initialisation aux émetteurs-récepteurs d'étiquettes pour indiquer le début d'une période d'écoute, le moyen de réception (50) de l'émétteur-récepteur d'interrogation est adapté à recevoir des signaux d'identification d'étiquettes pendant la période d'écoute à partir d'un sous-ensemble des émetteurs-récepteurs d'étiquettes, et le moyen d'émission de signal (52) de l'émetteur-récepteur d'interrogation est en outre adapté à envoyer des signaux d'accusé-réception pendant ladite période d'accusé-réception vers le sous-ensemble d'émetteurs-récepteurs d'étiquettes ; et
les moyens de réception de signal (1 ; 21, 22) des émetteurs-récepteurs d'étiquettes sont adaptés à recevoir le signal d'initialisation à partir du moyen d'émission de signal (52) de l'émetteur-récepteur d'interrogation de façon à identifier le début de la période d'écoute, les moyens d'émission (3) des émetteurs-récepteurs d'étiquettes sont adaptés à envoyer un signal d'identification d'étiquette pendant la période d'écoute et les moyens de réception de signal (1 ; 21, 22) des émetteurs-récepteurs d'étiquettes sont adaptés à recevoir un signal d'accusé-réception en provenance de l'émetteur-récepteur d'interrogation pendant la période d'accusé-réception.

2. Appareil selon la revendication 1, caractérisé en ce que les émetteurs-récepteurs d'étiquettes (8, 120, 130, 140) restent dans un mode de veille à faible consommation jusqu'à ce qu'ils soient activés par le signal d'initialisation (81) en provenance de l'émetteur-récepteur d'interrogation (7).

3. Appareil selon la revendication 1 ou 2, caractérisé en ce que le signal d'identification d'étiquette en provenance de chaque émetteur-récepteur d'étiquette (8, 120, 130, 140) est spécifique.

4. Appareil selon l'une des revendications précédentes, caractérisé en ce qu'un circuit de sonde de puissance fournit périodiquement un signal à un microprocesseur dans chaque émetteur-récepteur d'étiquette pour provoquer une opération de veille à faible puissance.

5. Appareil selon l'une des revendications précédentes, caractérisé en ce que les émetteurs-récepteurs d'étiquettes (8, 120, 130, 140) comprennent des moyens (2) pour retarder l'émission du signal d'identification d'étiquette par tout émetteur-récepteur d'étiquette restant pendant une durée particulière après les signaux d'émetteur-récepteur d'interrogation que requerra la retransmission.

6. Appareil selon la revendication 5, caractérisé en ce que la durée particulière est différente pour chaque émetteur-récepteur d'étiquette restant et est déterminée de façon pseudo-aléatoire.

7. Appareil selon l'une des revendications précédentes, caractérisé en outre en ce qu'il comprend des moyens pour déterminer l'emplacement des étiquettes des émetteurs-récepteurs d'étiquettes (8, 120, 130, 140).

8. Procédé pour identifier des éléments par émission et réception de signaux dans un système comprenant :
une pluralité d'émetteurs-récepteurs d'étiquettes (8 ; 120, 130, 140), un pour chacun des éléments,
un émetteur-récepteur d'interrogation (7) pour communiquer avec les émetteurs-récepteurs d'étiquettes,
dans lequel les émetteurs-récepteurs d'étiquettes et l'émetteur-récepteur d'interrogation communiquent selon un protocole de communication,
caractérisé en ce que
le protocole de communcation est un protocole par lot incluant une séquence comportant :
- une période d'écoute pendant laquelle chaque émetteur-récepteur d'étiquette peut transmettre un signal d'identification d'étiquette à l'émetteur-récepteur d'interrogation, et
- une période d'accusé-réception pendant laquelle l'émetteur-récepteur d'interrogation peut transmettre des signaux d'accusé-réception aux émetteurs-récepteurs d"étiquettes ; et en ce que :
l'émetteur-récepteur d'interrogation envoie un signal d'initialisation aux émetteurs-récepteurs d'étiquettes pour signaler le début de la période d'écoute, reçoit les signaux d'identification d'étiquettes pendant la période d'écoute à partir d'un sous-ensemble d'émetteurs-récepteurs d'étiquettes et envoie des signaux d'accusé-réception pendant la période d'accusé-réception au sous-ensemble d'émetteurs-récepteurs d'étiquettes ; et en ce que
les émetteurs-récepteurs d'étiquettes reçoivent le signal d'initialisation en provenance de l'émetteur-récepteur d'interrogations de façon à identifier le début de la période d'écoute, envoient un signal d'identification d'étiquette pendant la période d'écoute, et reçoivent un signal d'accusé-réception en provenance de l'émetteur-récepteur d'interrogation pendant la période d'accusé-réception.

9. Procédé selon la revendication 8, caractérisé en ce que le signal d'initialisation et les signaux d'accusé-réception sont émis par un sous-système central d'émetteur-récepteur d'interrogation.

10. Procédé selon la revendication 8 ou 9, caractérisé en ce que tous les émetteurs-récepteurs d'étiquettes dans une plage de réception du signal de début émettent des signaux d'identification.

11. Procédé selon la revendication 8, 9 ou 10, caractérisé en ce que l'étape d'émission de signaux d'identification d'étiquettes comprend en outre l'étape selon laquelle chaque émetteur-récepteur d'étiquette retarde l'initialisation de l'émission du signal d'identification d'étiquettes d'une durée particulière après réception du signal d'initialisation.

12. Procédé selon la revendication 11, caractérisé en ce que la durée particulière est déterminée de façon pseudo-aléatoire.
